# EUROPEAN PATENT SPECIFICATION

(11) **EP 2 505 066 B1**
(45) Date of publication and mention of the grant of the patent: **13.05.2015**
(21) Application number: 12161669.2
(22) Date of filing: 28.03.2012
(51) Int. Cl.: A21C 9/06, A21C 3/02

(54) **Ravioli making machine**
Ravioliherstellungsmaschine
Machine à fabriquer des raviolis

(30) Priority: 31.03.2011 IT PC20110005 U
(43) Date of publication of application: 03.10.2012
(73) Proprietor: Porcari, Gabriele, 29010 Alseno (PC) (IT)
(72) Inventor: Porcari, Gabriele, 29010 Alseno (PC) (IT)
(74) Representative: Benelli, Cristian

(56) References cited:
- FR-A- 1 445 076
- US-A- 1 844 142
- US-A- 2 577 925
- US-A- 3 605 641
- US-A1- 2007 122 516

## Description

### FIELD OF THE INVENTION

The present invention refers to a modular machine capable of continuously making ravioli from a dough. In other words, the modular machine is capable of continuously performing the process from the dough to the finished product (ravioli).

### PRIOR ART

The ravioli maker machines nowadays on the market use a sheet beforehand prepared by different machines, each operating independently. The sheet, which is the raw material used by the ravioli maker machines nowadays on the market, is produced by a first processing performed by a kneader and a second processing performed by a sheeter which produces strips of pasta which are often reeled in rolls.

Therefore, the ravioli maker machines nowadays on the market, must be provided with devices adapted to receive the sheet previously processed by a kneader and sheeter.

From the above it is inferred that the ravioli making process is nowadays performed by physically separated machines which operate in different times. Each of such machines forms a unit independent from the other, provided with its own structure, motorization, electric circuit, safety devices, each having its own needs of space, production, and maintenance.

An example of ravioli making machine is disclosed by the document US3605641.

### DISCLOSURE AND ADVANTAGES OF THE INVENTION

The object of the present invention is to provide a modular machine consisting of mechanical groups capable of performing all the different steps of the process, driven by one motor, with the aim of continuously producing ravioli from a dough, by limiting costs and size, obtaining, at the same time, an improvement of the quality of the finished product.

Specifically, object of the invention is to provide a modular machine for continuously making ravioli, characterized by the fact it comprises:
a. a kneader capable of kneading by a planetary-type mixer, the pasta components for ravioli;
b. a sheeter for producing the sheet, by receiving the dough discharged by a auger, continuously produces the sheet of which it is easily adjustably the thickness through a knob, said sheet being then laid down and conveyed on a belt;
and in which a continuous ravioli maker machine is connected to said kneader and sheeter. The characteristics and advantages of the present invention will be better understood from the following detailed description of a possible not limiting embodiment, with reference to the following figures.

Said objects and advantages are all met by the modular ravioli maker machine, object of the present invention, which is characterized by the following claims.

### BRIEF DESCRIPTION OF THE FIGURES

This and other characteristics will be better understood by the following description of some embodiments shown in an exemplifying and non limiting way in the attached drawings.

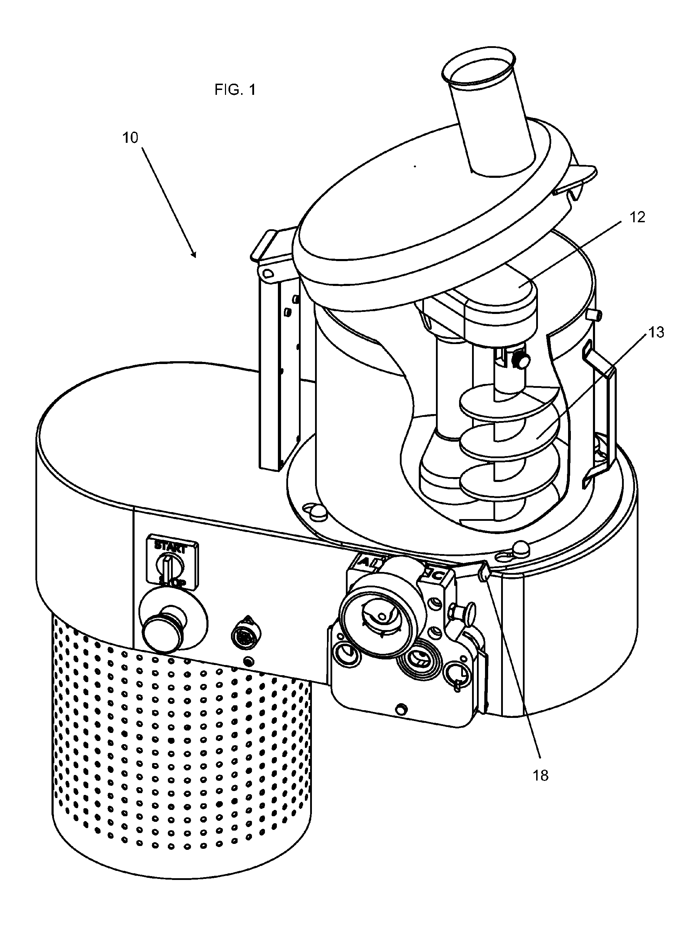

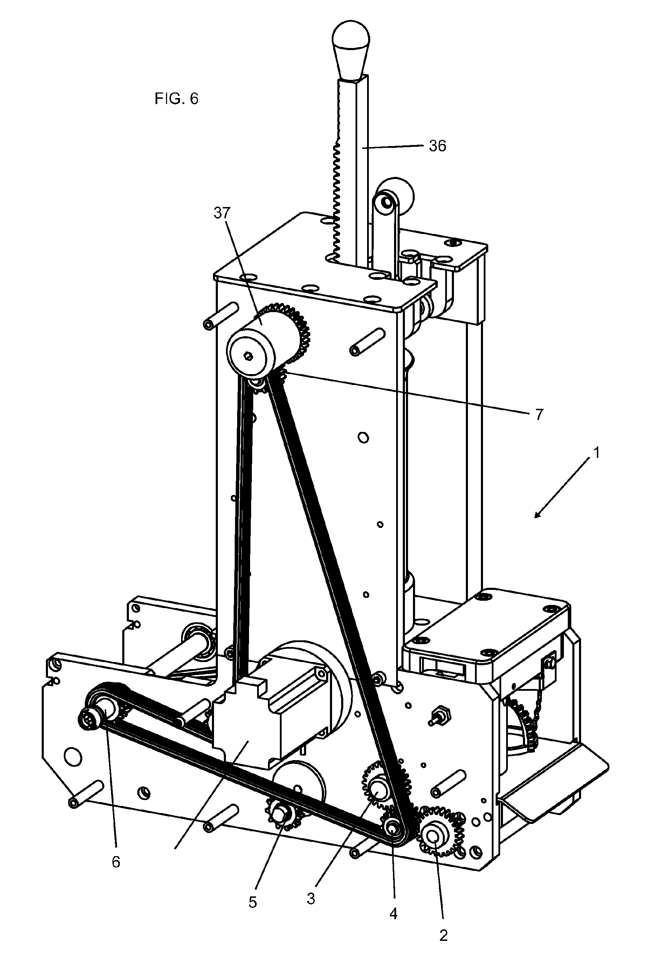

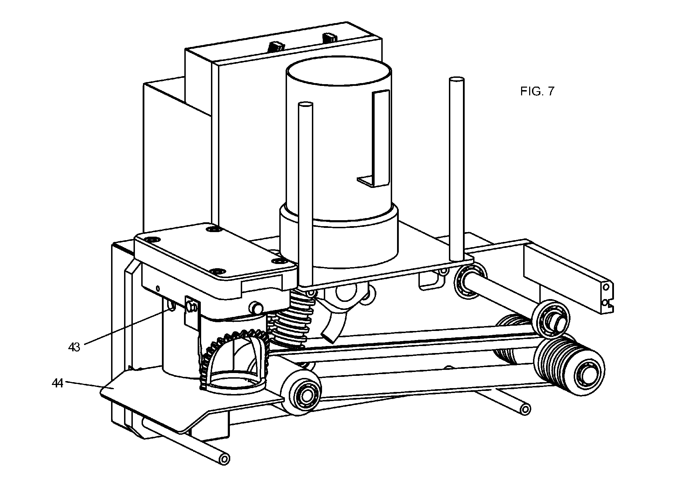

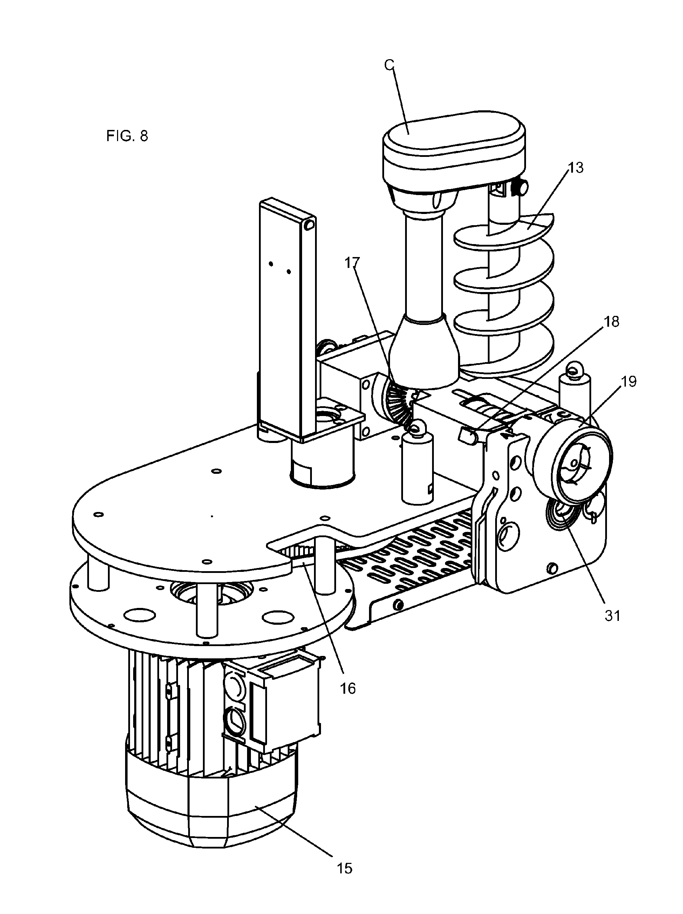

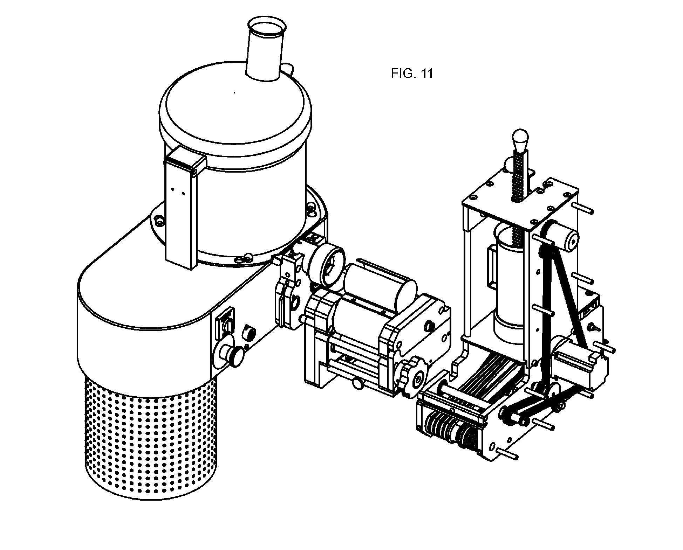

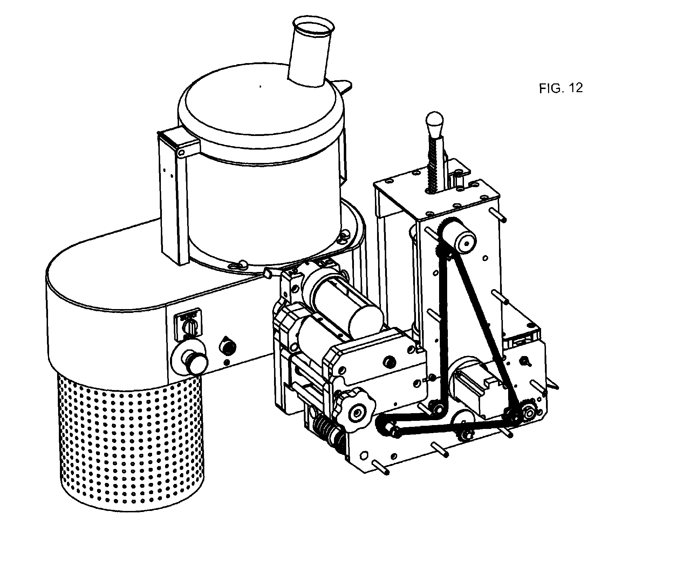

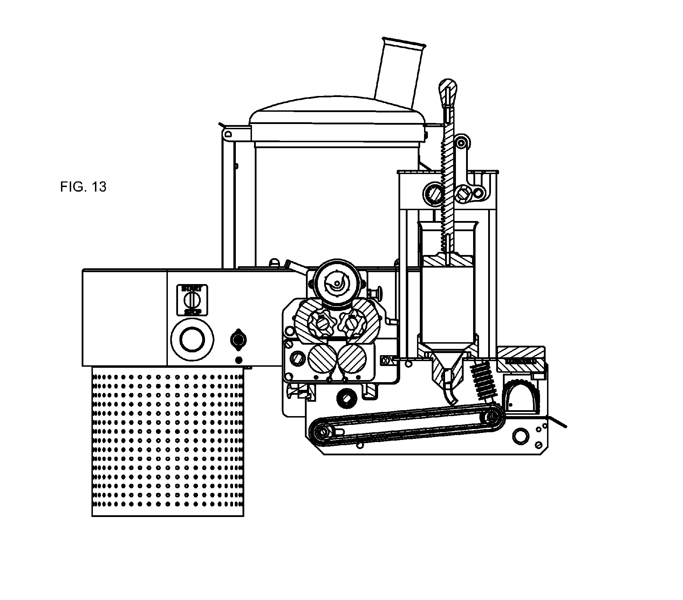

Figures 1-13 illustrate different views of the modular ravioli maker machine, comprising modules 1, 10, 20 respectively adapted to fill the formed pasta, and form ravioli, the kneader and sheeter.

### DESCRIPTION OF THE INVENTION

Referring particularly to the above mentioned figures, it is described in the following the modular machine formed by three modules 1, 10 and 20.

The first module 10 is the group adapted to knead and it is formed by a vertical cylindrical vessel 11, made of stainless steel AISI 304, receiving a planetary-type mixer 12 formed by a spiral 13 rotating around its axis; said axis, in turn, rotates around a vertical axis passing through the vessel 11 center: the combined movements enable the mixer to rotate while it moves inside the vessel, in this way it is possible to better mix, amalgamate and knead.

The figures illustrate also different cross-sections of the module, in other words the inside of the vessel so it is possible to observe the presence of a discharge auger 14, driven by one motor 15 of the machine of the invention, through a train of gears 16 and a crown-wheel-and-pinion 17.

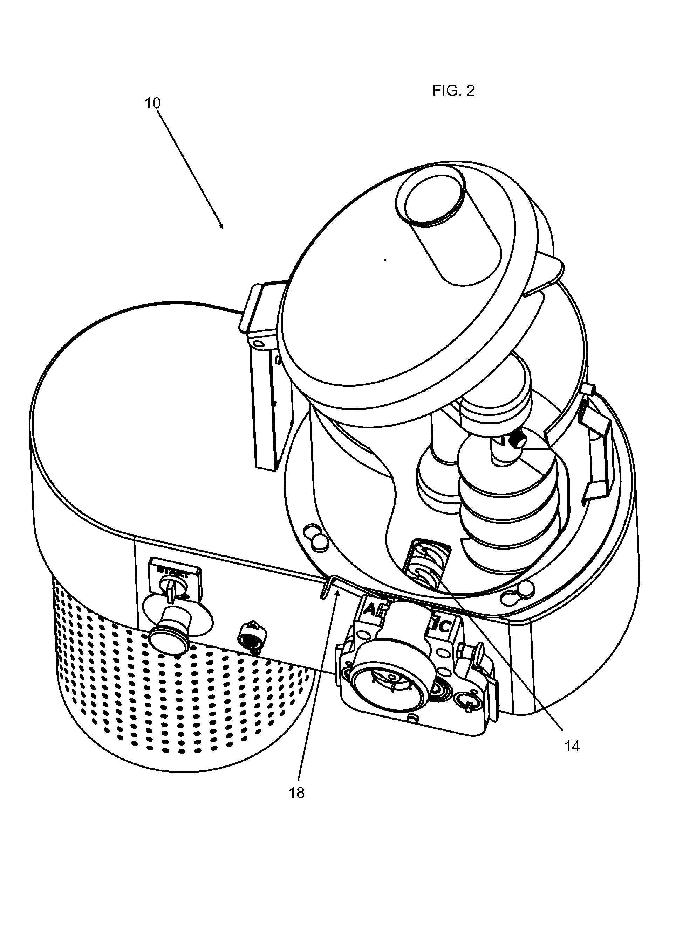

After having prepared the dough, it is opened a door on the bottom of the vessel 11 by moving the lever 18 from position c of Figure 1 to position b of Figure 2, and the product goes down in the auger 14 which discharges it in the second module or group 20 adapted to produce the sheet: by gradually receiving the dough, as discharged by the auger, the sheet is continuously produced having a thickness which can be easily adjusted by a knob 210.

The produced sheet goes on a transport means 21, a belt which conveys it under a cylindrical container 310 which can contain the ravioli filling.

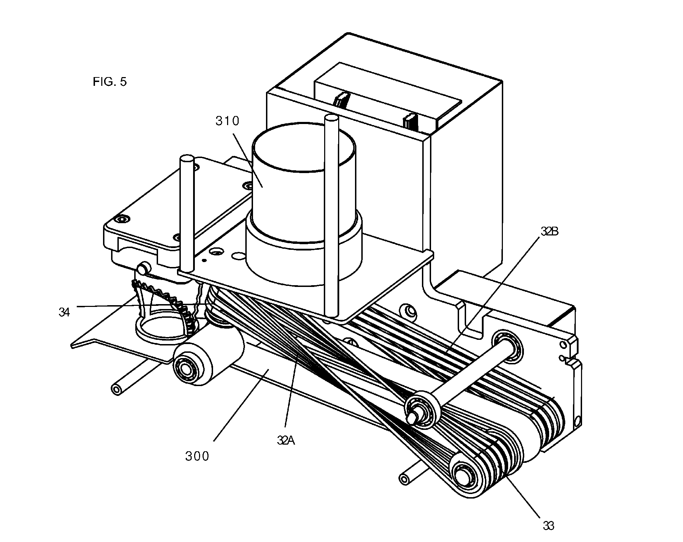

The conveyor belt 21 is sided, on both its sides, by a group of belts 32a, 32b, which first are wrapped around horizontal pulleys 33 to transmission pulleys 34 which are almost vertical, as it is shown in Figure 5. The object of this arrangement is, as it is better understood in the following, to longitudinally fold the two edges of the sheet for wrapping inside the filling, after having dosed it.

In the container 310, a piston 35 driven by a rack 36 keeps the filling under pressure. An adjustable ball torque limiter, coaxial with gear 38 which drives the rack, prevents the pressure to exceed the limit value set by an operator.

The filling dose drops on the sheet at the opening of a valve 39 driven by a corresponding stepper motor (not shown), which alternatively rotates counterclockwise and clockwise of 90[deg.], responsive to a signal transmitted by a sensor detecting the position of a smooth roll, that is the one of the mould which abuts the shaped roll 42 which gives to the ravioli their characteristic shape, by references 43 (holes or notches) made in the smooth roll.

The machine can make ravioli of different shapes: for each ravioli shape it is possible to mount a mould having a smooth roll having references corresponding to the shapes of the associated shaped roll.

To each rotation in a direction of valve 39 corresponds the opening of the same and therefore a filling dose drops on the sheet. To each rotation in the opposite direction corresponds the closure of the valve. The amount of the product dosed during the opening time of the valve is a function of the piston 35 pressure. The doses are always in phase with the mould rotation, since, as explained before, the signal comes from the latter.

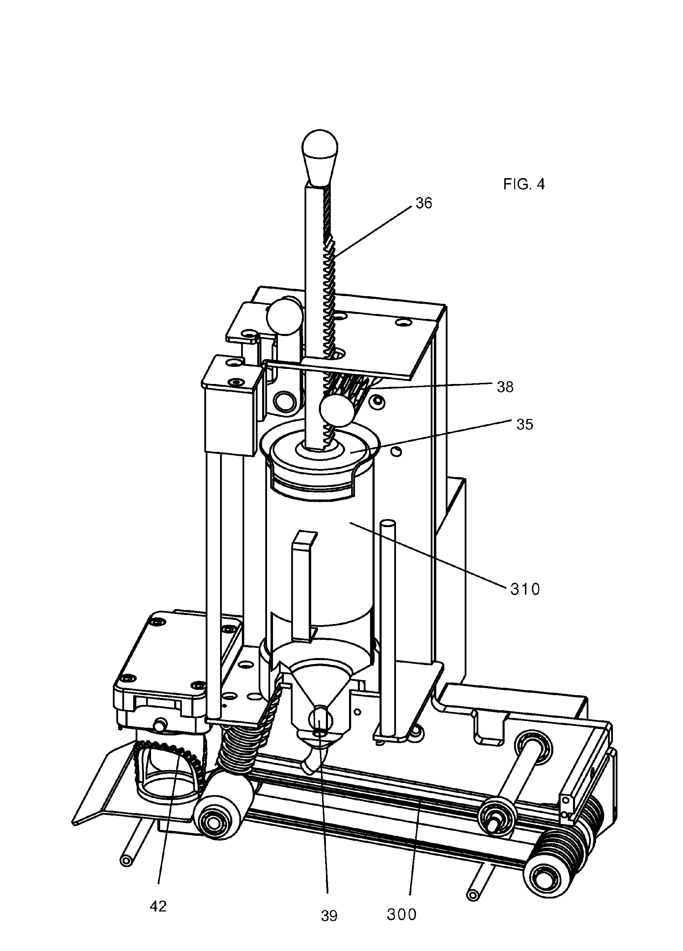

The sheet, after having received the filling dose, advances by the belt 300 meanwhile belts 32a and 32b which are at each side of belt 300 by moving from the horizontal pulleys to the almost vertical transmission pulleys (Figures 4 and 5), rise the sheet at the edges; by longitudinally folding it from the centerline, in order to close the filling by the two upwardly folded sheet edges.

The sheet, as folded, continues to move with a continuous motion to the mould formed by the shaped roll 42 and the counter smooth roll both rotating around their vertical axis. The mould closes the two pasta edges containing the filling dose, by forming one or more ravioli at each turn, according to the number of impressions on the shaped roll.

The ravioli are collected by a suitable discharge chute and in this way the ravioli production is continuous.

As said, the electric motor 15, located in the housing, drives, by a transmission formed by a toothed belt 16b, gears 16 and crown-wheel-and-pinion 17, the kneader planetary mixer 12.

The same motor 15, by a train of gears 2, 3, 4, 5, 6 and toothed belts 8 located on a plate supporting the backward portion of the machine, drives all the other operating members of the machine.

The only electric motor 15, besides being an extremely simple approach, enables to keep in phase all the operating parts of the machine.

The described machine has the great advantage of being modular.

The first module 10 is adapted to knead and, since it is considered an independent machine, it is a standard planetary kneader which, by disconnecting the transmission with the other groups, can be operated independently.

The extruder 19, supplied by the auger 15, enables to produce short or long pasta of different shapes.

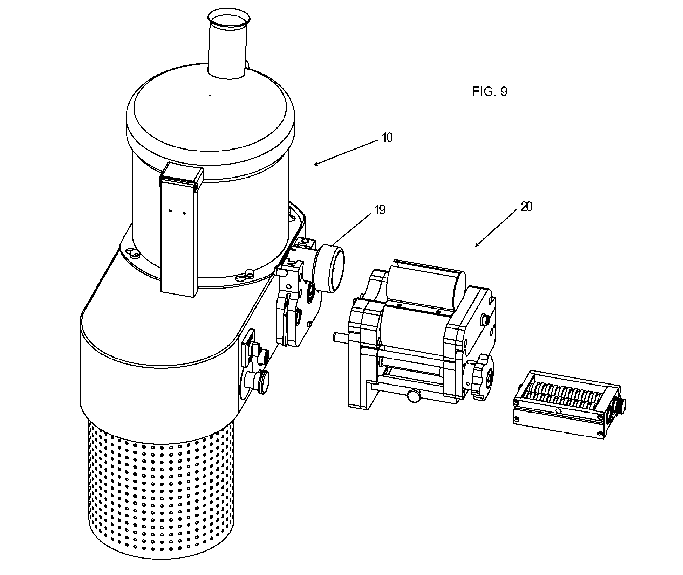

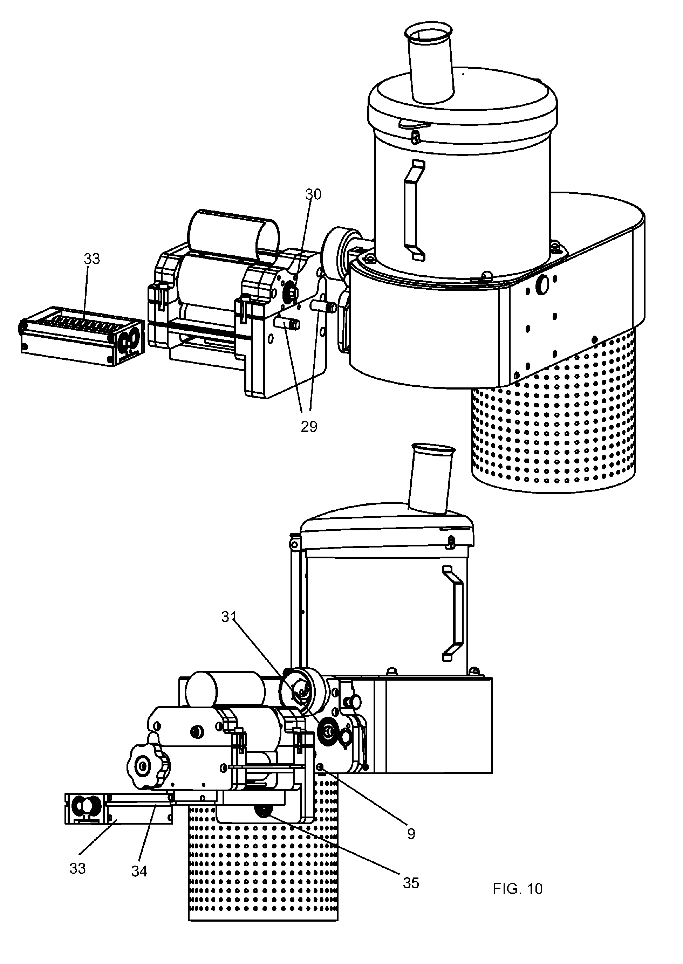

The second module can be easily added to the first module (Figure 9, position b): the connection is made, see Figure 10, by inserting rods 29 in holes 9: at the end the rods, which have a groove in the end portion, are fixed by manually rotating a handle 18.

By inserting the rods 29, also the shaft 30, which transmits the motion to the sheeter, enters the hollow shaft 31 having a slot cavity: in this way the shaft is driven by the hollow shaft which is in turn driven by the motorization of the first module 10.

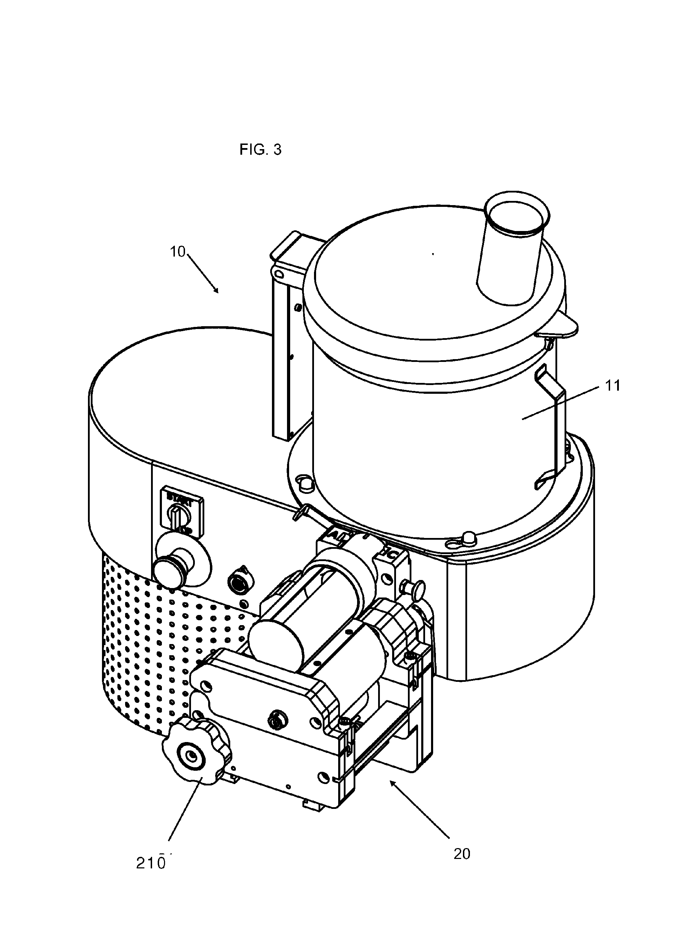

The second module 20, since is considered as an independent machine, is an outright sheeter. As such it can produce sheets of adjustable thickness with the handle 21 of Figure 3 or strips of pasta, by inserting a die insertable in suitable guides. Obviously, this can be done when it is not required the production of ravioli.

The operation is analogous to the one of the second module by the power takeoff formed by a gear of the sheeter shaft.

It is possible to use only the first two modules 10 and 20 which together form a kneader-sheeter assembly, capable of continuously kneading and producing different kinds of sheets, from the continuous type, as required for ravioli, to the strip-shaped one.

The third module 1 is applied to the sheeter in the same way as the above described die and enables the machine to produce ravioli.

The module 1 is provided with grooves which exactly enter guides 23 and uses the same power takeoff.

The three modules, connected as described above, form the whole modular machine for continuously producing ravioli.

With reference to the preceding description, the following advantages obtained by the present invention are highlighted:
- versatility of use because the machine can operate with the single distinct modules and by means of the accessories (extruder and die) the machine can produce also other different kinds of pasta, long or short, besides the ravioli;
- high production because the continuous production eliminates the dead times;
- space saving because just one group can perform the operations of three distinct machines;
- energetic saving because it is used just one motor; it is minimized the possibility of human errors because the present invention has a greater degree of automation of the whole process than the three distinct machines.

## Claims

1. Modular machine (1, 10, 20) for continuously making ravioli, comprising:
a. a kneader module (10) capable of kneading, by means of a planetary-type mixer (12), the pasta components for ravioli; said kneader being driven by an electric motor (15) capable of transmitting the motion to all the other operating members of the other modules (20, 1), so that they are always in phase one to the other, a gradual discharge device of the "kneader" module comprising an auger (14) driven by the electric motor (15) of the machine,
b. a sheeter module (20) for producing the sheet, by receiving the dough discharged by the auger (14), said sheeter producing the sheet with a thickness which is adjustable through a knob (210), said sheet being then laid down and conveyed on a belt (21).
c. a continuous ravioli maker machine (1) connected to said kneader (10) and sheeter (20).

2. Modular machine, according to claim 1, **characterized by** the fact that the kneader and sheeter are connected by rods (29) in holes (9): by inserting rods (29), the shaft (30), which transmits the motion to the sheeter, enters the hollow shaft (31) having a slot-shaped cavity so that the shaft (30) is operated by the hollow shaft (31) which in turn is driven by the motorization of the first module (10).

3. Modular machine, according to claim 1, **characterized by** the fact that the electric motor (15) drives, by a transmission consisting of a toothed belt (16b), gears (16), and a crown-wheel-and-pinion (17), the planetary mixer (12) of the kneader; the same motor (15), by a train of gears (2, 3, 4, 5, 6) and belts (8) on the plate supporting the back portion of the machine, drives all the other operating members of the machine.

4. Modular machine, according to claim 1, **characterized by** the fact that the kneader (10) forms the dough in a vessel (11) comprising a bottom openeable by a lever (18) wherein an auger (14) discharges it in the second module (20); a conveyor belt (21) is sided, on both sides, by a group of belts (32a, 32b) wrapped around pulleys (33) and (34) having angles different one from the other so that to longitudinally fold the two edges of the sheet, in order to wrap inside it the filling, which was previously dosed.

5. Modular machine, according to claim 1, **characterized by** the fact that a piston (35), driven by a rack (36), keeps the filling under pressure from the bottom; an adjustable ball torque limiter, coaxial with the gear (38), which drives the rack, prevents the pressure from exceeding a limit value set by the operator; the filling dose drops on the sheet at the opening of a valve (39) driven by a corresponding stepper motor which rotates alternatively clockwise and counterclockwise of 90° after a signal has been transmitted by a sensor detecting the position of the smooth roll, which in the mould abuts the shaped roll (42) which provides the ravioli the characteristic shape, by holes or notches (43) made on said smooth roll.

## Patentansprüche

1. Modulare Maschine (1, 10, 20), für die kontinuierliche Herstellung von Ravioli, umfassend:
a. ein Modul zum Kneten (10), das in der Lage ist, unter Verwendung eines Planetenmischers (12), die Bestandteile des Teigs für Ravioli zu kneten; wobei der besagte Mischer von einem Elektromotor (15) angetrieben wird, der in der Lage ist, die Bewegung auf alle anderen Betriebselemente der anderen Module (20, 1) derart zu übertragen, dass sie immer in Phase miteinander sind, eine Einrichtung für die allmähliche Entladung des "Moduls zum Kneten" umfassend eine durch den Elektromotor (15) der Maschine angetriebene Schnecke (14),
b. ein Modul (20), um den Teig zu herstellen, von dem der von der Schnecke (14) abgegebener Teig empfangen wird, wobei das besagte Modul den Teig mit einer Dicke herstellt, die durch einen Knopf (210) einstellbar ist, wobei das besagte Blätterteig dann abgelagert und auf einem Förderband (21) transportiert wird,
c. eine Maschine(1) zur kontinuierlichen Herstellung von Ravioli (1), die mit dem besagten Mischer (10) und Modul (20) für die Teigfertigung verbunden ist.

2. Modulare Maschine nach Anspruch 1, **dadurch gekennzeichnet, dass** der Mischer und das Modul für die Teigfertigung durch Stäbe (29) in Löchern (9) verbunden sind; beim Einsetzen von Stäben (29), tritt die Welle (30), die die Bewegung in die Knetmaschine überträgt, derart in den Hohlraum (31) der Welle ein, der mit einer Aussparung mit der Gestalt eines Schlitzes versehen ist, dass die Welle (30) von der Hohlwelle (31) angesteuert wird, die ihrerseits durch die angetriebene Motorisierung des ersten Moduls (10) betätigt wird.

3. Modulare Maschine nach Anspruch 1, **dadurch gekennzeichnet, dass** der Elektromotor (15) mittels eines Getriebes, umfassend einen Zahnriemen (16b), Zahnräder (16) und einen Zahnkranz und Ritzel (17), den Planetenmischer (12) der Knetmaschine antriebt; wobei dasselbe Motor (15), mittels einer Reihe von Zahnrädern (2, 3, 4, 5, 6) und Riemen (8) auf der Platte, die die Rückseite der Maschine trägt, alle anderen Betriebselemente der Maschine antreibt.

4. Modulare Maschine nach Anspruch 1, **dadurch gekennzeichnet, dass** die Knetmaschine (10) den Teig in einen Behälter (11) bildet, der mit einem Boden mit Hilfe eines Hebels (18) geöffnet wird, wobei eine Schnecke (14) die Entladung des Teiges in den zweiten Modul (20) durchführt; ein Förderband (21) ist auf beiden Seiten durch einen Satz von Riemen (32a, 32b) flankiert, die um Riemenscheiben (33) und (34) mit unterschiedlichen Winkeln zueinander gewickelt sind, wobei sie die beiden Ränder des Blätterteiges in der Längsrichtung biegen, um innerhalb dieser die Füllung zu wickeln, die zuvor dosiert wurde.

5. Modulare Maschine nach Anspruch 1, **dadurch gekennzeichnet, dass** ein durch eine Zahnstange (36) betätigter Kolben (35) die Füllung unter Druck von unten hält; ein verstellbarer Kugeldrehmomentbegrenzer, der koaxial mit dem Zahnrad (38) ist, das die Zahnstange antreibt, verhindert dass der Druck einen durch den Betreiber eingestellten Wert übersteigt; die Dosis der Füllung fällt auf den Blätterteig bei der Zeit der Öffnung eines Ventils (39) durch einen entsprechenden Schrittmotor, der abwechselnd sich im Uhrzeigersinn und gegen den Uhrzeigersinn um 90° dreht, nachdem ein Signal von einem Sensor gesandt wurde, der die Position des Rollenebners erfasst, der in der Form in Kontakt mit dem Rollenprofils (42) ist, welches den Ravioli ihre charakteristische Form verleiht, durch Löcher oder Kerben (43), die auf dem besagten Rollenebner gefertigt wurden.

## Revendications

1. Machine modulaire (1, 10, 20) pour produire en continu des raviolis, comprenant:
a. un module de malaxage (10), apte à malaxer, en utilisant un mélangeur (12) de type planétaire, les composants de la pâte à raviolis, ledit module de malaxage étant actionné par un moteur électrique (15) apte à transmettre le mouvement à tous les autres membres de fonctionnement des autres modules (20,1), de sorte qu'ils sont toujours en phase l'un avec l'autre, un dispositif de déchargement progressif du module "de malaxage" comprenant un alimentateur à vis (14) entraîné par le moteur électrique (15) de la machine,
b. un module de feuilletage (20) pour produire la pâte feuilletée, en recevant la pâte déchargée de la vis (14), ledit module de feuilletage produisant la pâte feuilletée avec une épaisseur qui est réglable par un bouton (210), ladite pâte feuilletée étant ensuite déposée et transportée sur un convoyeur (21).
c. une machine pour la fabrication en continu de raviolis (1), reliée audit module de malaxage (10) et de feuilletage (20).

2. Machine modulaire selon la revendication 1, **caractérisée en ce que** les modules de malaxage et de feuilletage sont reliés par des tiges (29) à l'intérieur de trous (9): par l'insertion des tiges (29), l'arbre (30), qui transmet le mouvement au module de malaxage, entre dans le creux (31) de l'arbre pourvu d'une cavité en forme de fente, de sorte que l'arbre (30) est actionné par l'arbre creux (31) qui à son tour est entraîné par le motorisation du premier module (10).

3. Machine modulaire selon la revendication 1, **caractérisée en ce que**
le moteur électrique (15) actionne, par l'intermédiaire d'une transmission comprenant une courroie dentée (16b), des engrenages (16) et une couronne dentée et pignon (17), le mélangeur planétaire (12) du module de malaxage; le même moteur (15), au moyen d'un train d'engrenages (2, 3, 4, 5, 6) et des courroies (8) sur la plaque qui supporte la partie arrière de la machine, actionne tous les autres éléments de fonctionnement de la machine.

4. Machine modulaire selon la revendication 1, **caractérisée en ce que**
le module de malaxage (10) forme la pâte dans un récipient (11) comportant un fond ouvert par l'intermédiaire d'un levier (18), dans lequel un alimentateur à vis (14) le décharge dans le second module (20); une bande transporteuse (21) est flanquée, sur ses deux côtés, par un jeu de courroies (32a, 32b) enroulées autour de poulies (33) et (34) avec des angles différents les uns des autres, de manière à plier dans la direction longitudinale les deux bords de la pâte feuilletée, à fin d'envelopper à son intérieur la garniture, qui a été précédemment dosée.

5. Machine modulaire selon la revendication 1, **caractérisée en ce que**
un piston (35), actionné par une crémaillère (36), maintient le remplissage sous pression à partir du fond; un limiteur de couple à billes réglable, coaxial avec l'engrenage (38) qui entraîne la crémaillère, empêche que la pression dépasse une valeur limite fixée par l'opérateur; la dose de remplissage tombe sur la pâte feuilletée au moment de l'ouverture d'une soupape (39) actionnée par un moteur pas à pas correspondant, qui tourne alternativement dans le sens horaire et antihoraire de 90° après qu'un signal a été transmis par un capteur, qui détecte la position du rouleau d'aplatissement, qui dans le moule est en contact avec le rouleau profilé (42) qui donne aux raviolis leur forme caractéristique, au moyen de trous ou d'encoches (43) formés sur ledit rouleau d'aplatissement.
